# DEMANDE DE BREVET EUROPEEN

(11) **EP 3 981 571 A1**
(43) Date de publication de la demande: **13.04.2022**
(21) Numéro de dépôt: 20201253.0
(22) Date de dépôt: 12.10.2020
(51) Int. Cl.: B29C 45/26

(54) **MOULE D'INJECTION POUR COMPOSANT HORLOGER**

(71) Demandeur: ROLEX SA, 1211 Genève 26 (CH)
(72) Inventeur: FLURI, Grégoire, 1212 Lancy (CH); MINCONE, Laurent, 74520 Jonzier Epagny (FR)
(74) Mandataire: Moinas & Savoye SARL

(57) **Abrégé**

Moule d'injection, comprenant un cœur de moule comprenant une première partie (1 ; 1') et une deuxième partie mobiles l'une par rapport à l'autre entre une première position d'injection dans laquelle lesdites deux parties sont rapprochées pour former une cavité d'injection permettant l'injection d'un matériau pour former une pièce injectée (50 ; 50') comportant au moins un composant (60) et une deuxième position de démoulage dans laquelle lesdites deux parties sont éloignées pour permettre le démoulage de ladite pièce injectée (50 ; 50'), et comprenant au moins un éjecteur (2, 3 ; 3') conçu pour participer au démoulage d'un composant injecté, caractérisé en ce que le moule d'injection comprend au moins une plaque intermédiaire (10 ; 10', 20'), distincte desdites deux parties du cœur de moule, et amovible, agencée entre lesdites deux parties du cœur de moule, comprenant au moins une première découpe (12 ; 12', 22') formant au moins une partie de la cavité d'injection du moule d'injection.

## Description

### Introduction

La présente invention concerne un moule d'injection et une plaque intermédiaire d'un tel moule d'injection. Elle porte particulièrement sur un moule d'injection adapté pour la micro-injection, notamment pour fabriquer des composants horlogers. Elle porte aussi sur un procédé de fabrication d'un composant horloger et d'une pièce d'horlogerie à partir d'un tel moule d'injection.

### Etat de l'Art

La fabrication de composants horlogers est particulièrement exigeante, notamment du fait que de tels composants présentent de très petites dimensions et nécessitent des propriétés mécaniques très élevées.

Une solution pour la fabrication de composants horlogers consiste à utiliser la micro-injection, qui consiste à injecter un matériau, par exemple un polymère, un composite, un métal ou une céramique, dans un moule d'injection, pour obtenir un composant après démoulage. Du fait des exigences mentionnées ci-dessus, les solutions existantes restent perfectibles. En effet, les solutions existantes présentent des inconvénients. Notamment, un moule pour la micro-injection est très onéreux, et ne permet pas facilement de procéder à de nombreux essais et changements de dimensions pour la mise au point d'un composant ou l'amélioration d'un composant. De plus, certains composants, parmi lesquels ceux de très petites dimensions et de forme très allongée, sont délicats à fabriquer par micro-injection car il est notamment complexe de garantir leur intégrité lors d'une phase d'éjection du moule d'injection.

Ainsi, l'invention cherche à atteindre tout ou partie des objets suivants.

Un premier objet de l'invention consiste à proposer une solution de fabrication d'un composant utilisant l'injection de matériau, compatible avec la fabrication d'un composant horloger.

Un deuxième objet de l'invention consiste à proposer une solution de fabrication d'un composant par injection qui permet d'atteindre une grande précision de manière robuste.

Un troisième objet de l'invention consiste à proposer une solution de fabrication d'un composant suffisamment flexible pour permettre des itérations de mise au point et/ou l'injection de différentes variantes de géométries sans surcoût important ni un temps de modification du moule trop long, avec une bonne précision géométrique.

### Brève description de l'invention

A cet effet, l'invention repose sur un moule d'injection, comprenant un cœur de moule comprenant une première partie et une deuxième partie mobiles l'une par rapport à l'autre entre une première position d'injection dans laquelle lesdites deux parties sont rapprochées pour former une cavité d'injection permettant l'injection d'un matériau pour former une pièce injectée comportant au moins un composant et une deuxième position de démoulage dans laquelle lesdites deux parties sont éloignées pour permettre le démoulage de ladite pièce injectée, et comprenant au moins un éjecteur conçu pour participer au démoulage d'un composant injecté, caractérisé en ce que le moule d'injection comprend au moins une plaque intermédiaire, distincte desdites deux parties du cœur de moule, et amovible, agencée entre lesdites deux parties du cœur de moule, comprenant au moins une première découpe formant au moins une partie de la cavité d'injection du moule d'injection.

L'invention est précisément définie par les revendications.

### Brève description des figures

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente une vue schématique en coupe d'un sous-ensemble d'un moule d'injection selon un premier mode de réalisation de l'invention.
La figure 2 représente une vue en perspective d'une coupe du sous-ensemble du moule d'injection selon le premier mode de réalisation de l'invention.
La figure 3 représente une vue en coupe d'une ébauche obtenue par injection dans le moule d'injection selon le premier mode de réalisation de l'invention.
La figure 4 représente une vue en perspective d'un corps vert issu de la pièce injectée de la figure 3.
La figure 5 représente une vue schématique en coupe d'un sous-ensemble d'un moule d'injection selon un deuxième mode de réalisation de l'invention.
La figure 6 représente une vue de dessus d'une première plaque intermédiaire du moule d'injection selon le premier ou le deuxième mode de réalisation de l'invention.
La figure 7 représente une vue de dessus d'une deuxième plaque intermédiaire 20' selon le deuxième mode de réalisation de l'invention.
La figure 8 représente une vue en perspective d'un cliquet de remontoir formé par un moule d'injection selon l'invention.
La figure 9 représente une vue de dessus du cliquet de remontoir formé par un moule d'injection selon l'invention.
La figure 10 représente une vue de côté du cliquet de remontoir formé par un moule d'injection selon l'invention.

Pour faciliter la lecture, nous utiliserons les mêmes références pour désigner les caractéristiques identiques dans les deux modes de réalisation, en ajoutant le signe « ' » pour le deuxième mode de réalisation.

Comme cela va être détaillé par la suite, le concept de l'invention repose sur l'utilisation d'un moule d'injection modulaire, comprenant au moins une plaque intermédiaire amovible. Cette architecture permet l'évolution de manière flexible du moule d'injection, par le simple changement d'une ou de plusieurs plaques intermédiaires, sans besoin de fabriquer l'intégralité du moule pour chaque changement. Par ce biais, l'invention permet la versatilité fiable et robuste d'un moule d'injection.

Plus précisément, l'invention repose sur un moule d'injection, comprenant un cœur de moule comprenant une première partie et une deuxième partie mobiles l'une par rapport à l'autre entre une première position d'injection dans laquelle lesdites deux parties sont rapprochées pour former une cavité d'injection, à laquelle participe au moins une plaque intermédiaire agencée entre lesdites deux parties, permettant l'injection d'un matériau pour former une ébauche injectée ou une pièce finie, et une deuxième position de démoulage permettant de retirer la pièce injectée ou la pièce finie. Une telle ébauche injectée comprend au moins un composant et de préférence plusieurs composants reliés entre eux par une grappe et/ou un support, ce qui permet ainsi l'injection simultanée de plusieurs composants. Dans ce cas, les composants injectés simultanément et leur support sont ensuite séparés de la grappe par une étape de découpe. La cavité d'injection du moule d'injection permet donc de fabriquer un ou plusieurs composants simultanément. Ces composants potentiellement multiples peuvent être identiques ou différents.

Les deux parties mobiles du cœur du moule d'injection peuvent de plus occuper une deuxième position de démoulage dans laquelle lesdites deux parties sont éloignées pour permettre le démoulage d'une ébauche injectée. Pour cela, le moule d'injection comprend au moins un éjecteur conçu pour participer au démoulage d'une ébauche (ou d'un composant) injectée.

Selon l'invention, le moule d'injection comprend de plus au moins une plaque intermédiaire, distincte desdites deux parties du cœur de moule, et amovible, agencée entre lesdites deux parties du cœur de moule, comprenant au moins une première découpe formant une partie de la cavité d'injection du moule d'injection.

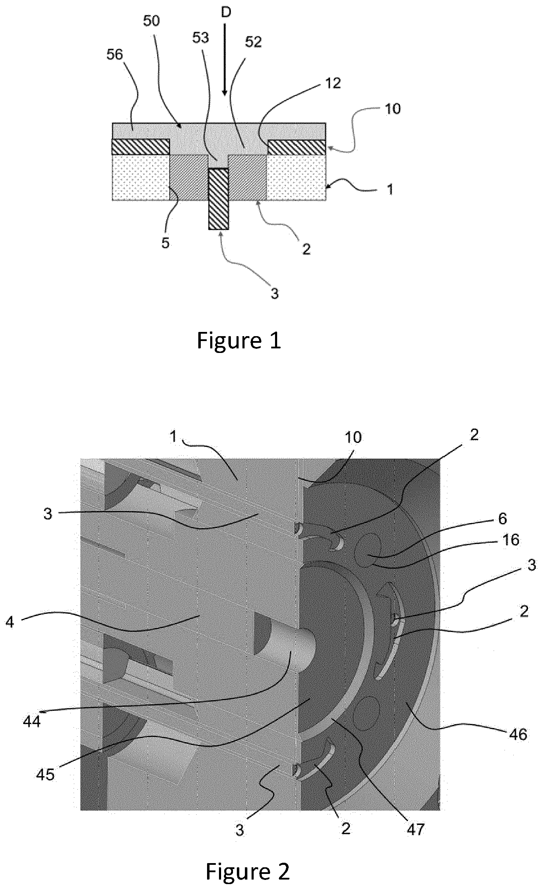

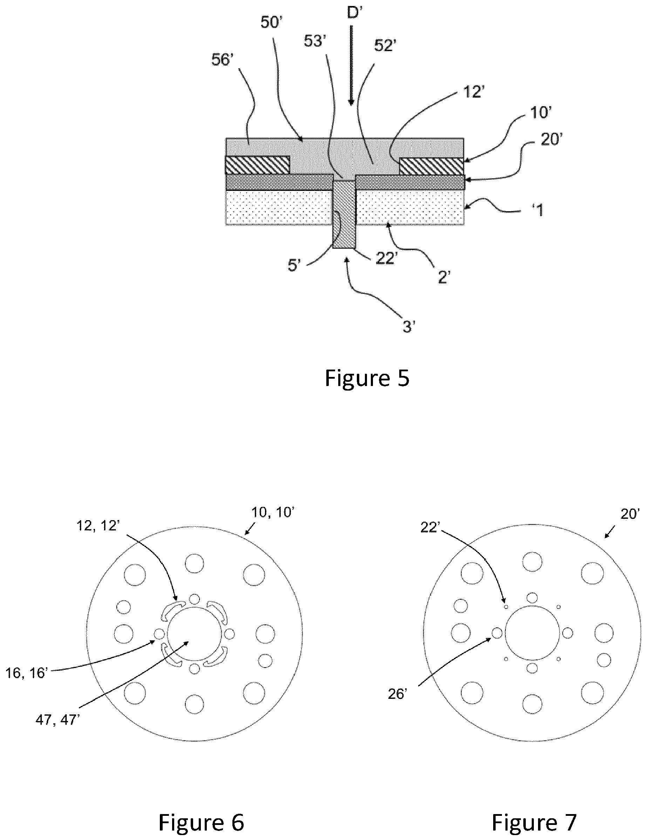

La figure 1 représente ainsi une première partie 1 d'un cœur de moule d'injection selon un premier mode de réalisation, coopérant avec une plaque intermédiaire 10, représentée par la figure 6. Cette plaque intermédiaire comprend une découpe 12. Le sous-ensemble formé par la première partie 1 et la plaque intermédiaire 10 définit une cavité qui permet la formation d'une pièce injectée 50 lors d'une phase d'injection. En remarque, dans une telle phase, une deuxième partie non représentée du cœur du moule d'injection vient coopérer avec ce sous-ensemble 1, 10 pour former une cavité fermée.

La deuxième partie se rapproche ou s'éloigne de la première partie selon une translation de direction D, appelée direction d'injection ou direction de fermeture du moule. Le matériau est injecté à partir de la vis d'injection dans la cavité d'injection selon cette même direction D. Avantageusement, les deux parties du cœur du moule d'injection et la plaque intermédiaire présentent des surfaces sensiblement planes, perpendiculaires à la direction d'injection. De plus, les différents éjecteurs 2, 3 sont mobiles selon cette même direction d'injection D, comme cela est précisé ci-dessous.

La première partie 1 comprend de même une découpe 5, superposée à la découpe 12 de la plaque intermédiaire 10 dans la direction d'injection D. Un premier éjecteur 2 de composant est disposé dans la découpe 5 de la première partie 1. En configuration d'injection, cet éjecteur 2 est positionné de sorte que son extrémité vienne se positionner dans la continuité de la surface de la première partie 1. Cette extrémité fait ainsi partie de la surface de la cavité d'injection. Autrement dit, elle participe à la définition de la forme d'un composant. En complément, un deuxième éjecteur 3 est disposé au niveau de la découpe 5 de la première partie 1 du moule d'injection, au voisinage du premier éjecteur 2. En phase d'injection, ce deuxième éjecteur 3 forme de même une surface de la cavité d'injection. Cette surface est en retrait vis-à-vis de la surface distale du premier éjecteur 2. Elle permet de définir une partie d'épaisseur plus importante de la pièce injectée 50, comme cela sera détaillé par la suite.

La découpe 12 de la plaque intermédiaire 10 est traversante. Elle est de plus positionnée en vis-à-vis de la découpe 5 de la première partie, de sorte que les éjecteurs 2, 3 sont positionnés selon une forme correspondant exactement à celle de la découpe 12 de la plaque intermédiaire. La découpe 12 de la plaque intermédiaire participe à la formation de la cavité d'injection du moule d'injection, notamment une partie de la cavité d'injection définissant précisément un composant à fabriquer. Plus particulièrement, les flancs de la découpe 12 de cette plaque intermédiaire 10 définissent le contour du composant injecté. La découpe 12 permet aussi le déplacement d'au moins un éjecteur 2, 3, principalement guidé par la première partie 1 du cœur du moule d'injection, permettant l'éjection d'un composant après une phase d'injection.

Par cette architecture du moule d'injection, la cavité d'injection permet de former une pièce injectée 50 comprenant un support 56, qui relie des composants distincts entre eux, et n'appartient pas à un composant à fabriquer. Un composant est formé par une première portion 52 de la pièce injectée 50, superposée au premier éjecteur 2, et par une deuxième portion 53 de la pièce injectée 50, superposée au deuxième éjecteur 3.

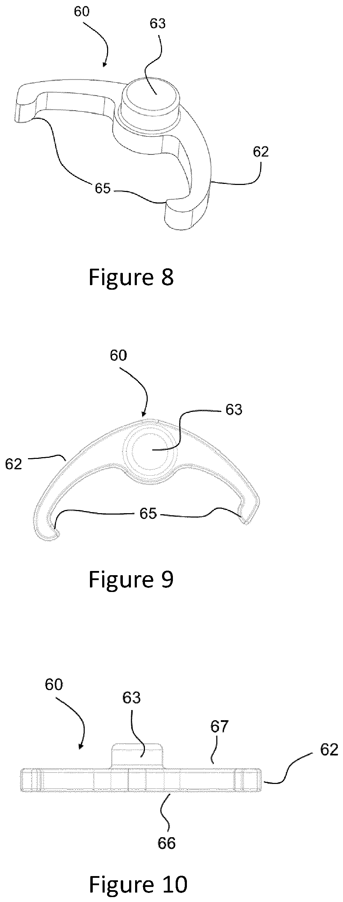

Il ressort donc que la cavité d'injection du moule d'injection destinée à former une pièce injectée 50 est principalement délimitée dans la première position d'injection du moule d'injection par :
- la première découpe 12 de la plaque intermédiaire 10,
- une extrémité d'un premier éjecteur 2, l'extrémité dudit premier éjecteur 2 étant située à fleur d'une des faces de la plaque intermédiaire 10, et une extrémité d'un deuxième éjecteur 3, ces deux éjecteurs étant agencés et guidés par la première partie 1 du cœur du moule, et par
- la deuxième partie du cœur de moule, non représentée, qui vient définir le verso de la pièce injectée 50, par exemple une face plane.
Plus précisément, la tranche de la découpe 12 de la plaque intermédiaire 10 forme la surface de la cavité du moule d'injection qui définit la périphérie du composant horloger, la surface latérale 62 du composant horloger, en dehors du tenon. En remarque, dans l'exemple illustré, le moule d'injection est utilisé pour fabriquer un composant horloger, plus exactement un cliquet de remontoir 60, particulièrement représenté par les figures 8 à 10. La deuxième portion 53 susmentionnée forme un tenon 63 du cliquet de remontoir 60, et la première portion 52 forme la partie latérale 62 du cliquet de remontoir 60, notamment des becs 65.

Naturellement, l'invention ne se limite pas à la forme spécifique de la cavité d'injection décrite précédemment. En effet, la géométrie de la plaque intermédiaire 10 et des deux parties mobiles du moule d'injection pourra être adaptée pour former tout autre composant souhaité. De même, le moule d'injection pourra comprendre un nombre différent et/ou des formes différentes d'éjecteurs de composant. De plus, la plaque intermédiaire 10 du moule d'injection peut comprendre, outre la découpe traversante décrite, au moins une découpe borgne et/ou au moins une texturation de sa surface pour former au moins une partie de la cavité d'injection de géométrie différente.

La figure 2 représente plus en détail une vue en perspective du sous-ensemble du moule d'injection, sur laquelle il apparaît que le moule d'injection présente une forme globalement cylindrique, formant une portion annulaire 46 sur sa périphérie au sein de laquelle sont agencées plusieurs cavités, au niveau des multiples couples d'éjecteurs 2, 3 susmentionnés, destinées à former plusieurs composants, comme par exemple plusieurs cliquets de remontoir identiques dans ce mode de réalisation.

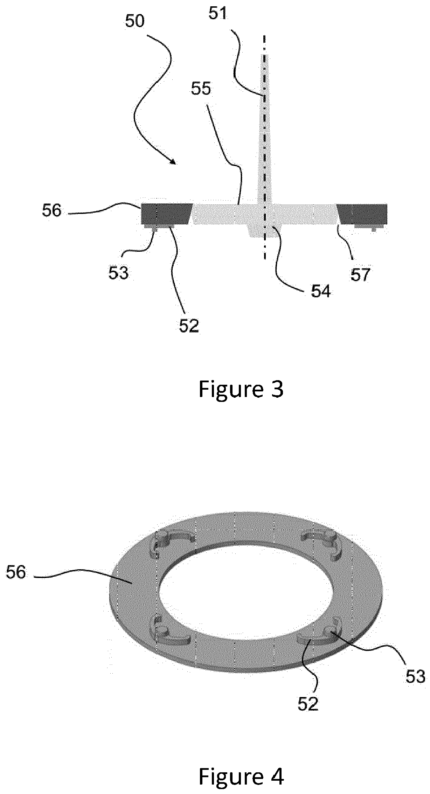

Lors d'une phase d'injection avec un tel moule d'injection, une pièce injectée 50, représentée par la figure 3, est formée. Le matériau injecté est répandu de manière continue sur la portion annulaire 46 contenant les différents composants à fabriquer, qui sont liés entre eux par un support 56 de forme annulaire. Le matériau injecté est de plus présent dans une cavité plus profonde en partie centrale 44 du moule d'injection, formant une tige 54 d'une pièce injectée 50, appelée couramment « arrache-carotte », par laquelle la pièce injectée 50 peut être manipulée, et dans le canal d'injection de la matière, non illustré, formant une carotte d'injection 51. Le matériau injecté est de plus aussi présent dans la zone intermédiaire 45 entre cette partie centrale 44 et la portion annulaire 46, formant une nappe d'injection 55 de la pièce injectée 50. Au niveau de la liaison entre la portion annulaire 46 périphérique et la zone intermédiaire 45, une ligne de découpe 47 est formée, qui forme une ligne de prédécoupe 57 sur la pièce injectée résultante. Le procédé met alors en œuvre une étape de découpe le long de cette ligne de prédécoupe 57, permettant de conserver le support 56 comprenant les composants 52, 53 uniquement, représentée sur la figure 4.

Pour faciliter l'éjection d'une telle pièce injectée 50 après sa formation, le moule d'injection comprend de plus un éjecteur central 4, destiné à coopérer avec la tige 54 d'une pièce injectée. Il comprend de plus des éjecteurs 6 de support 56, agencés sur la portion annulaire 46 entre les différents composants à fabriquer. Le système d'éjection du moule d'éjection selon le premier mode de réalisation comprend ainsi une multitude d'éjecteurs complémentaires, montés mobiles au sein d'une première partie 1 du cœur du moule d'injection, qui remplit une fonction de guidage de ces éjecteurs.

La plaque intermédiaire 10 comprend ainsi des découpes 16 complémentaires traversantes, au niveau des éjecteurs 6 de la première partie du cœur de moule d'injection, pour permettre leur déplacement au travers la plaque intermédiaire lors d'une phase d'éjection, dans laquelle les éjecteurs viennent au contact direct de la pièce injectée pour la détacher du sous-ensemble représenté.

Comme cela a été décrit, le système d'éjection peut être adapté au composant à fabriquer et peut se présenter différemment. Toutefois, il sera avantageux de présenter au moins un éjecteur de support, indépendant d'un composant à fabriquer. Pour cela, la plaque intermédiaire comprend avantageusement au moins une deuxième découpe 16 traversante distincte de la première découpe 12, cette deuxième découpe étant conçue pour le seul passage d'un éjecteur, alors que la première découpe a pour première fonction la définition de la cavité d'injection qui forme spécifiquement un composant à fabriquer.

Dans ce mode de réalisation, les multiples éjecteurs agissent au niveau du composant à fabriquer, et même particulièrement séparément au niveau d'un tenon et d'une surface du composant entourant ce tenon, mais également au niveau du support reliant plusieurs composants et/ou de la partie centrale constituée de la nappe d'injection. Cette approche permet d'éviter de déformer la pièce injectée lors de son éjection du moule, et est particulièrement adaptée pour des pièces présentant une grande surface tout en étant fines. Cette approche est également particulièrement adaptée à l'éjection d'une ébauche fragile, par exemple formée par injection de céramique, qui comprend des particules de céramique et un liant lors de son injection.

La première partie 1 du cœur de moule d'injection comprend donc plusieurs ouvertures dans lesquelles différents éjecteurs sont agencés de manière mobile en translation. Cette première partie 1 du cœur de moule d'injection forme un guide pour ces éjecteurs. La plaque intermédiaire 10 comprend des ouvertures traversantes au niveau de ces éjecteurs, qui peuvent ainsi la traverser lors d'une phase d'éjection pour venir au contact du matériau injecté.

Comme évoqué précédemment, la partie centrale de la pièce injectée 50 représentée sur la figure 3, formant une nappe d'injection 55, est généralement retirée au moment de l'ouverture du moule par une découpe le long de la ligne de prédécoupe 57, et une éjection par le biais de l'éjecteur central 4. Il en résulte une rondelle, illustrée par la figure 4, de forme annulaire, qui comprend plusieurs composants solidaires d'un support 56. Une fois cette rondelle consolidée, par exemple par refroidissement dans le cas d'une rondelle en métal ou en polymère ou par déliantage et frittage dans le cas d'une rondelle en céramique, les composants individuels sont séparés du support 56 par rectification plane, permettant ainsi de définir la face 66 de chacun des composants. Dans l'exemple décrit, les composants sont des cliquets de remontoir, plus particulièrement représentés par les figures 8 à 10.

Avantageusement, la plaque intermédiaire 10 est réalisée par la technologie LIGA. Cette approche comprend de manière connue la formation d'un moule par photolithographie, puis la croissance d'un métal au sein du moule. Cette technologie LIGA est avantageuse car elle permet d'obtenir une plaque intermédiaire avec une grande précision, tout en permettant de reproduire, à l'aide d'un même masque, plusieurs plaques intermédiaires identiques. Les flancs de cette plaque intermédiaire sont importants puisqu'ils définissent la forme finale du composant injecté. Pour cela, il pourra être avantageux d'utiliser l'enseignement des documents EP3670440 et/ou EP3670441 lors de la fabrication de la plaque intermédiaire 10.

En variante, une plaque intermédiaire peut également être réalisée par usinage conventionnel ou par usinage au fil ou par étampage ou par usinage laser dans des plaques métalliques.

Les pressions et températures du procédé d'injection requièrent des matériaux présentant une résistance mécanique (Rm) suffisante et une stabilité géométrique en température au moins jusqu'à 100°C, voire jusqu'à 300°C. Ainsi, la plaque intermédiaire peut être en nickel ou en alliage de nickel, en acier rapide, en acier ASP^{®} élaboré par métallurgie des poudres, en carbure de tungstène ou en tout acier conventionnellement utilisé pour la fabrication de moules.

En remarque, l'utilisation de la plaque intermédiaire présente de nombreux avantages. Notamment, cette plaque intermédiaire définit une partie importante de la cavité d'injection, et notamment la géométrie des becs 65 du cliquet de remontoir 60 dans le cas présent. Cette géométrie initiale, bien que retravaillée par des étapes de finition comme un polissage, est essentielle pour la bonne performance future du composant. Ainsi, lorsque la plaque intermédiaire s'use, ou si de légères modifications sont nécessaires pour augmenter la performance du composant horloger, il suffit de changer la plaque intermédiaire, voire en complément les éjecteurs. Cette construction modulaire du moule d'injection apporte une flexibilité dans la forme de la plaque intermédiaire, dont la découpe peut être légèrement modifiée, tant qu'elle permet toujours le passage d'un ou de plusieurs éjecteurs.

Il est important de souligner que le moule d'injection décrit permet la micro-injection. Il permet l'utilisation de différents matériaux, parmi lesquels les polymères, les composites, les métaux ou plus particulièrement les céramiques. Il permet ainsi la fabrication d'un composant horloger, notamment en céramique.

L'invention ne se limite pas au mode de réalisation décrit. Notamment, des géométries plus complexes peuvent être formées en utilisant plusieurs plaques intermédiaires, notamment deux, trois ou même plus.

Ainsi, les figures 5 à 7 illustrent un moule d'injection selon un deuxième mode de réalisation, comprenant deux plaques intermédiaires. Ce deuxième mode de réalisation va être illustré à titre d'exemple dans le cas de la fabrication d'une ébauche et de composants identiques à ceux décrits dans l'exemple d'utilisation du moule d'injection selon le premier mode de réalisation.

La figure 5 représente ainsi une première partie 1' d'un cœur de moule d'injection selon un deuxième mode de réalisation, coopérant avec une première plaque intermédiaire 10' et une deuxième plaque intermédiaire 20'. Ces deux plaques intermédiaires 10', 20', respectivement illustrées par les figures 6 et 7, comprennent chacune respectivement une découpe 12', 22' traversante, et leurs découpes 12', 22' sont au moins partiellement superposées. Le sous-ensemble formé par la première partie 1' du cœur de moule d'injection et les deux plaques intermédiaires 10', 20' repose donc sur la superposition de trois éléments dans la direction d'injection, la deuxième plaque intermédiaire 20' étant positionnée entre la première partie 1' du cœur de moule d'injection et la première plaque intermédiaire 10'. Ce sous-ensemble définit une cavité qui permet la formation d'une pièce injectée 50' lors d'une phase d'injection. En remarque, dans une telle phase, une deuxième partie non représentée du cœur de moule d'injection vient coopérer avec ce sous-ensemble pour former une cavité fermée.

La deuxième partie du cœur de moule d'injection se rapproche ou s'éloigne de la première partie selon une translation de direction D', appelée direction d'injection ou direction de fermeture du moule comme mentionné précédemment. Le matériau est injecté dans la cavité d'injection selon cette même direction D'. Avantageusement, les deux parties du cœur de moule d'injection et les plaques intermédiaires présentent des surfaces sensiblement planes, perpendiculaires à la direction d'injection. De plus, les différents éjecteurs sont mobiles selon cette même direction d'injection D'.

La première partie 1' du cœur de moule d'injection comprend de même une découpe 5' superposée au moins partiellement aux découpes 12', 22' des plaques intermédiaires 10', 20' dans la direction d'injection et de fermeture du moule D'. Un éjecteur 3' de composant est disposé dans la découpe 5' de la première partie 1'. En configuration d'injection, cet éjecteur 3' est positionné de sorte que sa surface distale vienne se positionner de manière à définir la hauteur du tenon 53'. Cette surface distale fait ainsi partie de la surface de la cavité d'injection. Autrement dit, elle participe à la définition de la forme d'un composant. Cette surface est en retrait vis-à-vis des surfaces des deux plaques intermédiaires 10', 20' définissant la cavité d'injection. Elle permet de définir une partie d'épaisseur plus importante de la pièce injectée 50', comme cela sera détaillé par la suite.

Comme illustré sur la figure 6, la découpe 12' de la première plaque intermédiaire 10' est traversante. Il en est de même de la découpe 22' de la deuxième plaque intermédiaire 20'. Ces deux découpes 12', 22' sont de plus positionnées en vis-à-vis de la découpe 5' de la première partie 1', de sorte que l'éjecteur 3' est positionné selon une forme correspondant sensiblement à celle de la découpe 22' de la deuxième plaque intermédiaire 20'. Cette découpe 22' de la deuxième plaque intermédiaire 20' participe à la formation d'une partie de la cavité d'injection du moule d'injection, qui définit plus précisément un tenon 53' d'une pièce injectée 50' à fabriquer. Elle permet aussi le déplacement d'au moins un éjecteur 3', destiné à agir plus précisément sur ce tenon 53', principalement guidé par la première partie 1' du cœur de moule d'injection, permettant l'éjection d'un composant après une phase d'injection. La découpe 12' de la première plaque intermédiaire 10' participe aussi à la formation de la cavité d'injection du moule d'injection, plus précisément à une partie de la cavité d'injection définissant le composant 52' de la pièce injectée 50', en dehors du tenon 53'.

Par cette architecture du moule d'injection, la cavité d'injection permet de former une pièce injectée 50' similaire à celle obtenue par le moule d'injection selon le premier mode de réalisation, comprenant un support 56', qui relie des composants distincts entre eux, et n'appartient pas à un composant à fabriquer. Un composant est formé par une première portion 52' de la pièce injectée 50' et par une deuxième portion 53' de la pièce injectée 50', superposée à l'éjecteur 3'.

En remarque, dans l'exemple illustré, le moule d'injection selon le deuxième mode de réalisation est donc bien utilisé pour fabriquer un composant horloger, et plus exactement un cliquet de remontoir 60, particulièrement représenté par les figures 8 à 10, comme pour l'exemple illustré par le premier mode de réalisation.

Il ressort donc que la cavité d'injection du moule d'injection destinée à former une pièce injectée 50' injectée est principalement délimitée dans la première position d'injection du moule d'injection par :
- la première découpe 12' de la au moins une première plaque intermédiaire 10',
- la première découpe 22' de la au moins une deuxième plaque intermédiaire 20',
- une extrémité d'un éjecteur 3', l'extrémité dudit éjecteur 3' étant située dans l'épaisseur de l'une des plaques intermédiaires, voire dépassant de l'une ou des plaques intermédiaires, cet éjecteur 3' étant agencé et guidé par la première partie 1' du cœur du moule, et par
- la deuxième partie du cœur de moule, non représentée, qui vient définir le verso de la pièce injectée 50', par exemple une face plane.

Plus précisément, le flanc de la découpe 12' de la première plaque intermédiaire 10' forme la surface de la cavité du moule d'injection qui définit la périphérie, la surface latérale 62 du composant horloger, en dehors du tenon 63. Le flanc de la découpe 22' de la deuxième plaque intermédiaire 20' forme la surface de la cavité du moule d'injection qui définit la périphérie du tenon du composant horloger. La surface supérieure de la deuxième plaque intermédiaire 20' définit aussi une surface 67 du composant horloger et la deuxième partie du cœur de moule définit le verso de la pièce injectée 50'.

Ce deuxième mode de réalisation apporte une flexibilité supplémentaire relativement au premier mode de réalisation, puisque des portions distinctes d'un même composant sont finalement définies par des plaques intermédiaires distinctes et amovibles d'un moule d'injection. Il est ainsi possible de modifier une seule des deux portions en modifiant une seule plaque intermédiaire, sans modifier l'autre portion, ni l'autre plaque intermédiaire. D'autre part, seule l'extrémité du tenon est définie par une autre partie (l'éjecteur 3') que les deux plaques intermédiaires. Il est ainsi possible de modifier la forme du composant, notamment la forme d'un bec de cliquet, de manière plus versatile encore, et/ou notamment de varier la hauteur du tenon, sans changer la première partie 1' du cœur de moule d'injection, en n'intervenant que sur les plaques intermédiaires et/ou sur la position de l'éjecteur 3'.

Finalement, ce deuxième mode de réalisation peut être généralisé à tout moule d'injection comprenant au moins deux plaques intermédiaires au moins partiellement superposées comprenant chacune au moins une première découpe délimitant des surfaces de la cavité d'injection, leurs premières découpes respectives étant superposées pour définir des géométries complémentaires de ladite cavité d'injection. Ces premières découpes et/ou d'autres découpes des plaques intermédiaires sont de plus conçues pour permettre le passage d'un même éjecteur d'une pièce injectée au travers des au moins deux plaques intermédiaires.

Les figures 6 et 7 illustrent les deux plaques intermédiaires 10' et 20'.
Comme dans le cas du premier mode de réalisation, le moule d'injection est prévu pour présenter une forme sensiblement cylindrique, formant une ébauche permettant d'obtenir un corps vert de forme annulaire comprenant plusieurs composants. Les plaques intermédiaires présentent ainsi une forme de disque, comprenant des découpes pour former une partie de la cavité d'injection et/ou pour le passage de différents éjecteurs. Ainsi, outre les premières découpes 12', 22' mentionnées précédemment, ces plaques intermédiaires 10', 20' comprennent respectivement des découpes supplémentaires 16', 26' superposées permettant le passage d'éjecteurs complémentaires d'une pièce injectée 50', non représentés, de manière semblable au premier mode de réalisation, notamment décrit en relation avec la figure 2.

En remarque, les plaques intermédiaires 10', 20' peuvent être fabriquées par les mêmes procédés que ceux décrits dans le cadre du premier mode de réalisation.

Naturellement, l'invention ne se limite pas aux modes de réalisation décrits, les plaques pouvant prendre d'autres formes que celles décrites. Une plaque intermédiaire peut par exemple comprendre une découpe borgne et/ou un relief positif et/ou une texturation au niveau de la cavité d'injection du moule d'injection. De plus, la ou les plaques intermédiaires sont montées de manière amovible sur un moule d'injection, de manière à permettre leur changement indépendamment les unes des autres si nécessaire.

L'invention porte aussi sur une plaque intermédiaire en tant que telle. Une telle plaque intermédiaire comprend au moins une première découpe, et est conçue pour son agencement amovible entre deux parties mobiles d'un moule d'injection, de sorte que ladite au moins une première découpe forme une partie de la cavité d'injection dudit moule d'injection. Cette au moins une première découpe est traversante. La plaque intermédiaire peut comprendre en outre au moins une découpe borgne et/ou au moins une texturation de la surface de la plaque formant la cavité d'injection. Elle peut comprendre aussi au moins une deuxième découpe pour permettre le passage d'un éjecteur d'un moule d'injection. Elle peut se présenter dans un matériau présentant une résistance mécanique conçue pour supporter la pression d'un moule d'injection et présentant une stabilité géométrique jusqu'à une température d'au moins 100°C, voire jusqu'à 300°C, notamment en métal comme un acier ou en carbure de tungstène.

L'invention porte aussi sur un procédé de fabrication d'une plaque intermédiaire pour moule d'injection telle que décrite précédemment, caractérisé en ce qu'il comprend une étape de fabrication de la plaque intermédiaire par croissance galvanique, notamment par le procédé LIGA, ou par usinage d'une plaque métallique, notamment au fil ou au laser, ou par étampage.

L'invention porte aussi sur un procédé de fabrication d'un composant horloger et d'une pièce d'horlogerie, notamment une montre bracelet, caractérisé en ce qu'il comprend une étape d'injection d'un matériau dans la cavité d'injection d'un moule d'injection tel que décrit précédemment. Avantageusement, un tel matériau est un matériau à base de céramique, c'est-à-dire comprend en poids au moins 50% de céramique. La fabrication d'une pièce d'horlogerie peut comprendre l'intégration d'un ou de plusieurs composants horlogers fabriqués en tout ou partie par une injection de matériau dans un moule d'injection selon l'invention, tel que décrit précédemment.

Le procédé de fabrication d'un composant horloger peut comprendre une étape consistant à sélectionner au moins une plaque intermédiaire dudit moule d'injection parmi différentes plaques intermédiaires adaptées au moule d'injection, afin de déterminer la géométrie du composant.

Le procédé de fabrication d'un composant horloger peut aussi comprendre une étape préalable de fabrication de ladite plaque intermédiaire distincte par croissance galvanique, notamment par le procédé LIGA, ou par usinage d'une plaque métallique, notamment au fil ou au laser, ou par étampage.

L'invention a été mise en œuvre dans le cadre de la fabrication d'un composant horloger. Elle pourrait aussi être appliquée pour la fabrication de tout composant de petite dimension, c'est-à-dire de manière générale dans le domaine de la micro-injection. De manière encore plus générale, la solution pourrait être implémentée pour tout moule d'injection, indépendamment de sa dimension.

## Revendications

1. Moule d'injection, comprenant un cœur de moule comprenant une première partie (1 ; 1') et une deuxième partie mobiles l'une par rapport à l'autre entre une première position d'injection dans laquelle lesdites deux parties sont rapprochées pour former une cavité d'injection permettant l'injection d'un matériau pour former une pièce injectée (50 ; 50') comportant au moins un composant (60) et une deuxième position de démoulage dans laquelle lesdites deux parties sont éloignées pour permettre le démoulage de ladite pièce injectée (50 ; 50'), et comprenant au moins un éjecteur (2, 3 ; 3') conçu pour participer au démoulage de ladite pièce injectée (50 ; 50'), **caractérisé en ce que** le moule d'injection comprend au moins une plaque intermédiaire (10 ; 10', 20'), distincte desdites deux parties du cœur de moule, et amovible, agencée entre lesdites deux parties du cœur de moule, comprenant au moins une première découpe (12 ; 12', 22') formant au moins une partie de la cavité d'injection du moule d'injection.

2. Moule d'injection selon la revendication précédente, **caractérisé en ce que** lesdites deux parties du cœur de moule sont mobiles l'une par rapport à l'autre en translation selon une direction du moule, et **en ce que** la au moins une plaque intermédiaire (10 ; 10', 20') se présente comme une plaque sensiblement plane positionnée dans un plan perpendiculaire à ladite direction du moule.

3. Moule d'injection selon l'une des revendications précédentes, **caractérisé en ce que** la au moins une première découpe (12 ; 12', 22') de la au moins une plaque intermédiaire (10 ; 10', 20') est traversante.

4. Moule d'injection selon l'une des revendications précédentes **caractérisé en ce que** la au moins une plaque intermédiaire (10 ; 10', 20') comporte en outre au moins une découpe borgne et/ou au moins une texturation de la surface de la plaque formant au moins une partie de la cavité d'injection.

5. Moule d'injection selon l'une des revendications précédentes, **caractérisé en ce qu'**il comprend au moins deux plaques intermédiaires (10', 20') au moins partiellement superposées comprenant chacune au moins une première découpe (12', 22') délimitant chacune au moins une partie de la cavité d'injection, leurs premières découpes (12', 22') respectives étant superposées.

6. Moule d'injection selon l'une des revendications précédentes **caractérisé en ce que** le au moins un éjecteur (2, 3 ; 3') permet d'éjecter une pièce injectée (50, 50'), en passant au travers la au moins une première découpe (12 ; 12', 22') de la au moins une plaque intermédiaire (10 ; 10', 20').

7. Moule d'injection selon l'une des revendications précédentes, **caractérisé en ce que** la au moins une plaque intermédiaire (10 ; 10', 20') comprend au moins une deuxième découpe (16 ; 16') traversante distincte de la première découpe (12 ; 12', 22'), conçue pour le passage d'un éjecteur (4, 6 ; 4', 6').

8. Moule d'injection selon la revendication 5, **caractérisé en ce que** les plaques intermédiaires (10', 20') comportent chacune au moins une deuxième découpe (16', 26') traversante et **en ce que** lesdites deuxièmes découpes (16', 26') traversantes respectives sont au moins partiellement superposées de sorte à permettre le passage d'un même éjecteur.

9. Moule d'injection selon l'une des revendications précédentes, **caractérisé en ce que** la cavité d'injection destinée à former une pièce injectée (50 ; 50') comportant au moins un composant est principalement délimitée par :
• la première partie (1 ; 1') du cœur de moule et/ou par au moins un éjecteur (4, 4') de la première partie (1 ; 1'), et par
• la au moins une première découpe (12 ; 12', 22') de la au moins une plaque intermédiaire (10 ; 10', 20'), et par
• au moins une extrémité d'au moins un deuxième éjecteur (3, 3'), et par
• la deuxième partie du cœur de moule.

10. Moule d'injection selon l'une des revendications précédentes, **caractérisé en ce que** la première partie (1, 1') du cœur de moule et/ou la deuxième partie du cœur de moule, contre laquelle la au moins une plaque intermédiaire (10 ; 10', 20') est en appui, est plane.

11. Moule d'injection selon l'une des revendications précédentes, **caractérisé en ce que** la au moins une plaque intermédiaire (10 ; 10', 20') comprend plusieurs premières découpes (12 ; 12', 22') destinées à la définition simultanée de la géométrie de plusieurs composants injectés, et **en ce que** la cavité d'injection comporte une section située dans un plan parallèle à celui de la au moins une plaque intermédiaire (10 ; 10', 20'), configurée de sorte que les différents composants injectés restent liés entre eux par un support (56 ; 56') injecté après éjection du moule d'injection.

12. Moule d'injection selon la revendication précédente, **caractérisé en ce qu'**il comprend au moins un éjecteur mobile (16, 16') permettant d'éjecter la pièce injectée en agissant au niveau du support injecté.

13. Plaque intermédiaire (10 ; 10', 20') pour moule d'injection, **caractérisée en ce qu'**elle comprend au moins une première découpe (12 ; 12', 22') et **en ce qu'**elle est conçue pour son agencement amovible entre deux parties mobiles d'un moule d'injection, de sorte que ladite au moins une première découpe (12 ; 12', 22') forme une partie de la cavité d'injection dudit moule d'injection.

14. Plaque intermédiaire (10 ; 10', 20') pour moule d'injection selon la revendication précédente, **caractérisée en ce que** la au moins une première découpe (12 ; 12', 22') est traversante.

15. Plaque intermédiaire (10 ; 10', 20') pour moule d'injection selon la revendication précédente, **caractérisée en ce qu'**elle comporte en outre au moins une découpe borgne et/ou au moins une texturation de la surface de la plaque intermédiaire (10 ; 10', 20') formant la cavité d'injection.

16. Plaque intermédiaire (10 ; 10', 20') selon l'une des revendications 13 à 15 **caractérisée en ce qu'**elle comporte au moins une deuxième découpe (16, 47 ; 16', 47', 26') permettant le passage d'un éjecteur (4, 6 ; 4', 6') d'un moule d'injection.

17. Plaque intermédiaire (10 ; 10', 20') selon l'une des revendications 13 à 16, **caractérisée en ce qu'**elle se présente dans un matériau présentant une résistance mécanique conçue pour supporter la pression d'un moule d'injection et présentant une stabilité géométrique jusqu'à une température d'au moins 100°C, voire jusqu'à 300°C, notamment en métal comme un acier ou en carbure de tungstène.

18. Procédé de fabrication d'une plaque intermédiaire pour moule d'injection selon l'une des revendications 13 à 17, **caractérisé en ce qu'**il comprend une étape de fabrication de la plaque intermédiaire par croissance galvanique, notamment par un procédé LIGA, ou par usinage d'une plaque métallique, notamment au fil ou au laser, ou par étampage.

19. Procédé de fabrication d'un composant horloger ou d'une pièce d'horlogerie, **caractérisé en ce qu'**il comprend une étape d'injection d'un matériau dans la cavité d'injection d'un moule d'injection selon l'une des revendications 1 à 12.

20. Procédé de fabrication d'un composant horloger ou d'une pièce d'horlogerie selon la revendication précédente, **caractérisé en ce que** ledit matériau est un matériau à base de céramique.

21. Procédé de fabrication d'un composant horloger ou d'une pièce d'horlogerie selon la revendication 19 ou 20, **caractérisé en ce que** le composant horloger est un cliquet.

22. Procédé de fabrication d'un composant horloger ou d'une pièce d'horlogerie selon l'une des revendications 19 à 21, **caractérisé en ce qu'**il comprend une étape consistant à sélectionner au moins une plaque intermédiaire adaptée au moule d'injection et à l'insérer dans le moule d'injection avant l'étape d'injection du matériau.
